# EUROPEAN PATENT SPECIFICATION

(11) **EP 1 987 208 B1**
(45) Date of publication and mention of the grant of the patent: **15.08.2012**
(21) Application number: 07709346.6
(22) Date of filing: 14.02.2007
(51) Int. Cl.: E04B 1/80

(54) **Thermal insulation plate comprising an insulating core and an elevated surface portion, thermally insulated structure of such plates and method for constructing such structure**
Wärmeisolationsplatte mit einem Isolationskern und einem erhöhten Oberflächenteil, wärmeisolierte Struktur für eine solche Platte und Verfahren zur Konstruktion einer solchen Struktur
Plaque d'isolation thermique comprenant un noyau isolant et une partie superficielle surélevée, structure isolée thermiquement de telles plaques et procédé de fabrication d'une telle structure

(30) Priority: 22.02.2006 SE 0600380
(43) Date of publication of application: 05.11.2008
(73) Proprietor: Saint-Gobain Byggprodukter AB, 191 24 Sollentuna (SE)
(72) Inventor: KUBINA, Libor, 252 44 Psary (CZ)
(74) Representative: Goldenberg, Virginie Isabelle
(86) International application number: PCT/SE2007/000131
(87) International publication number: WO 2007/097681

(56) References cited:
- DE-C1- 10 204 352
- US-A- 5 060 446
- US-A- 5 252 408
- US-A- 5 756 179

## Description

### FIELD OF THE INVENTION

The present invention relates to a thermal insulation plate for construction of thermally insulated structures. This type of insulation plates comprises an insulation panel, such as a vacuum insulation panel (VIP) or another high efficient insulation panel. The insulation plates of this type are commonly used for constructing structures such as insulated walls or ceilings. Such plates may also be used in the construction of insulated roofs, floors or other insulated structures.

The present invention also relates to a thermally insulated structure and a method for constructing such structure.

### PRIOR ART

A plurality of insulation plates, insulated structures and methods for the construction of such structures are disclosed in the prior art. One such plate and structure is disclosed in US5875599. This document discloses a modular enhanced vacuum insulation panel comprising a vacuum insulation panel and a framing structure secured to at least a portion of the outer periphery of the panel. The framing structure comprises an outer edge portion provided with a profile to mate with an outer edge portion of an adjacent and similar framing structure of an adjacent panel. One object of the panel according to US5875599 is to provide uniform edge dimensions and to improve the thermal performance, in particular at the outer edges of the panel.

However, there is a need in the art for an insulation plate enabling the construction of a structure which has a further improved thermal performance, in particular at the outer edges of the plates. There is also a need in the art for an insulated structure which has improved thermal performance.

Hence, one problem with such prior art plates and structures is thermal bridges reducing the thermal performance.

### BRIEF DESCRIPTION OF THE INVENTION

An object of the present invention is to overcome the above-mentioned problem and provide an insulation plate enabling the construction of a structure which has an improved thermal performance, in particular at the outer edges of said plates. Another object of the present invention is to provide a thermally insulated structure constructed from such plates and a method for construction of such structure.

Hence, the present invention relates to a thermal insulation plate for construction of thermally insulated structures, said plate comprising an insulation panel having a higher insulating capacity than the remaining portions thereof, characterised in that a first face of the plate comprises an elevated surface leaving a circumferential recess and resulting in a first plate portion with the insulation panel and a second plate portion having a smaller circumference than the insulation panel, wherein the outer periphery of the insulation panel projects beyond the outer periphery of the second plate portion so that the recess overlaps the insulation panel for receiving a joint cover insulation plate.

This results in a plate that allows the insulation panels of adjacent plates to be overlapped by joint cover insulation plates in the recess to obtain a thermally improved structure. For example, the insulation panel is a high efficient insulation panel, such as a vacuum insulation panel (VIP), and the joint cover insulation plates can also comprise a high efficient insulation material, such as a VIP, wherein the high efficient insulation of the insulation panel is overlapped by high efficient insulation of the joint cover insulation plate. The joint cover insulation plates can extend continuously from a first position just beyond one edge of the insulation panel of a first plate to a second position just beyond the edge of the insulation panel of an adjacent second plate. In this manner the joints and joint areas of adjacent plates are covered more efficiently to avoid thermal bridges between the insulation panels. Further, any person using the plates is guided by the recesses to assure correct and precise positioning of joint cover insulation plates.

According to one embodiment of the present invention the depth of the recess corresponds to the thickness of the joint cover insulation plates, wherein a flat or level structure face is obtained for further coating with for example rendering and similar. Preferably, the face comprising the elevated surface and the recess is an outer face of the plate, i.e. the face being directed away from the supporting structure. The elevated surface can be a central elevated surface. The plate can be used on the interior face of a supporting structure as well on the exterior face thereof. Preferably, the opposite face of the plate is substantially flat for fixing to the supporting structure by means of an adhesive, such as glue or a cement based adhesive. The plate can be fixed to the supporting structure by means of an adhesive and/or by mechanical fastening means, such as dowels.

The insulation panel is, for example, a vacuum insulation panel (in the following abbreviated to VIP). The insulation panel can be another high efficient insulation panel, e.g. including expanded plastic, fibre or a gas. However, the preferred embodiment described below uses VIPs. According to one embodiment of the invention the VIP is embedded in the plate, i.e. the first plate portion thereof. For example, the VIP is embedded in a structure of expanded plastic, such as expanded polystyrene or polyurethane. The plate can be formed in such materials. Hence, the VIP is protected from damage during transport and at the construction site to obtain easy and safe handling. Consequently, the insulating capacity of the insulation panel is higher than the insulating capacity of the remaining portions of the plate, such as the protecting structure enclosing the insulation panel. Further, the plate is provided with a surface which allows easy gluing to the supporting structure by means of conventional adhesives. The plate can be fixed to the supporting structure by means of an adhesive and/or by mechanical fastening means, such as dowels.

According to one embodiment of the present invention an edge portion of the first plate portion of the plate is arranged as a cutting zone, wherein the edge portion can be cut off for size adjustment of the plate directly at the building site. The cutting zone is arranged between the insulation plate and the periphery of the plate to avoid VIP damages. For example, the cutting zone is indicated on the plate to obtain easy and safe handling. The elevated surface of the plate can of course deviate from the central position when the edge portion of the first plate portion is cut. Further, the second plate portion can also be cut to adapt the width of the recess in accordance with the width of the joint cover insulation plates. Hence, the area of the elevated surface is adjustable by means of cutting so that it can maintain its central position if required and so that the recess for the joint cover insulation plates can be adapted.

The present invention also relates to a thermally insulated structure comprising a plurality of adjacent thermal insulation plates as described above, characterised in that the joint cover insulation plates are arranged in the recesses formed by adjacent plates so that the plates extend over the joints between adjacent plates and overlap the VIPs to avoid thermal bridges. Thus, the joint cover insulation plates can extend continuously between elevated surfaces of adjacent plates so that the joint area is provided with uninterrupted insulation to avoid heat losses in the area between the VIPs. Hence, the joints between the components of the insulated structure are, seen from the outer face of the insulated structure, interrupted by a VIP.

The insulation plates are, for example, fastened to a supporting structure as described above. The improved thermal performance of the insulation allows construction of thinner structures, such as walls. For example, the insulation plates can be made with a thickness of less than 110 mm. According to one embodiment the thickness of the insulation plates is 80 mm. The total thickness of the plate could be slightly more than twice the thickness of the VIP. The VIPs can be provided with a thickness of, for example, 10 to 50 mm. One example of a supporting structure is 200 to 250 mm, wherein a fully insulated structure becomes, for example, about 280 to 330 mm.

The present invention also relates to a method for constructing a thermally insulated structure, comprising the steps of positioning and fastening insulation plates on a supporting structure, which insulation plates comprise an insulation panel having a higher insulating capacity than the remaining portions thereof, such as a VIP, characterised by the steps of arranging an elevated surface of each plate in the outer direction of the structure for forming a recess over a joint area between adjacent plates, and positioning and attaching joint cover insulation plates in said recesses for covering said joint areas and overlapping the insulation panels, such as the VIPs. The insulation plates can be positioned horizontally as well as vertically on the supporting structure.

Further characteristics and advantages of the present invention will become apparent from the description of the embodiments below, the appended drawings and the dependent claims.

### BRIEF DESCRIPTION OF THE DRAWINGS

The invention will now be described in more detail by means of embodiment examples and with reference to the enclosed drawings, on which:
Fig. 1 is a schematic perspective view of an insulation plate according to the present invention, showing the exterior shape of the plate,
Fig. 2 is a schematic section view of the insulation plate according to Fig. 1, showing the position of the VIP within the plate and a cutting zone of the plate,
Fig. 3 is a schematic front view of the insulation plate according to Fig. 1 and Fig. 2, showing the embedded VIP in dashed lines.
Fig. 4 is a schematic side view, partly in cross section, of an insulated structure comprising insulation plates arranged on a supporting structure and provided with joint cover insulation plates according to one embodiment of the invention,
Fig. 5 is a schematic side view, partly in cross section, of the insulated structure of Fig. 4 provided with further joint cover insulation plates,
Fig. 6 is a schematic perspective view, partly in cross section, of an insulated structure comprising horizontal as well as vertical joint cover insulation plates, and
Fig. 7 is a schematic front view of a structure provided with plates and joint cover insulation plates according to one embodiment of the invention.

### THE INVENTION

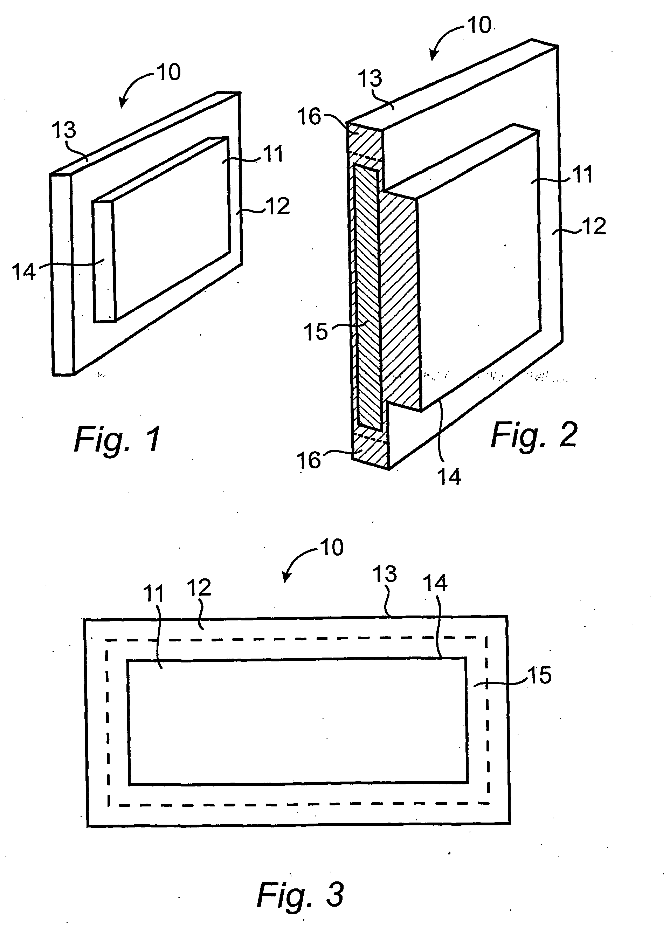

Fig. 1 illustrates schematically an insulation plate 10 according to the present invention. The insulation plate 10 is adapted for the construction of thermally insulated structures, such as walls, ceilings, roofs, floors and similar structures of, for example, houses and other types of buildings. Such thermally insulated structures and the construction thereof will be described in more detail below.

The insulation plate 10 comprises a first face, a second face and edge sides. The first face of the plate 10 comprises an elevated surface 11 leaving a circumferential recess 12 or an indentation around the plate 10. Preferably, the elevated surface 11 is a central elevated surface. Hence, the elevated surface 11 and the circumferential recess 12 result in a first plate portion 13 and a second plate portion 14, wherein the second plate portion 14 is smaller than the first plate portion 13, i.e. the periphery or circumference of the second plate portion 14 is smaller than the first plate portion 13 so that the periphery or circumference of the first plate portion 13 projects beyond the periphery of the second plate portion 14. The plate portions 13, 14 are arranged in parallel, wherein the second plate portion 14, in a basic embodiment of the plate 10, is arranged centrally on the first plate portion 13. Consequently, the face of the second plate portion 14 corresponds to the elevated surface 11. Preferably, the first plate portion 13 and the second plate portion 14 are formed as parallel rectangular parallelepipeds. The first plate portion 13 and the second plate portion 14 are, for example, arranged with different thicknesses. Alternatively, the first plate portion 13 and the second plate portion 14 are arranged with the same thickness.

With reference also to Fig. 2 and Fig. 3 the insulation plate 10 comprises an insulation panel 15. Preferably, the insulation panel is a conventional vacuum insulation panel, VIP. Alternatively, the insulation panel is another type of high efficient insulation panel. The insulation panel is a VIP in the described example. The VIP 15 is arranged in the first plate portion 13 of the insulation plate 10, wherein the VIP 15 extends in the plane of the first plate portion 13. The insulation plate 15 is larger than the second plate portion 14 and the elevated surface 11. Hence, the second plate portion 14 has a smaller circumference than the VIP 15, wherein the outer periphery of the VIP 15 projects beyond the outer periphery of the second plate portion 14 so that the recess 12 overlaps the VIP 15. The VIP 15 projects beyond the circumference of the elevated surface 11, i.e. around all sides of the second plate portion 14, which is illustrated by the dashed lines in Fig. 3.

Preferably, the VIP 15 is embedded in the insulation plate 10, wherein the first plate portion 13 encloses the entire VIP 15 for protection thereof so that the first plate portion 13 forms a protecting structure for the VIP 15. According to one embodiment of the present invention the first and second plate portions 13, 14 are integrated. For example, the first and second plate portions 13, 14 are a foamed plastic structure, such as a polystyrene structure or a polyurethane structure, wherein the VIP 15 is embedded in the foamed plastic structure being shaped with the elevated surface 11.

According to one embodiment of the present invention, the insulation plate 10 is provided with a cutting zone 16 for size adjustment of the insulation plate 10. The first plate portion 13 comprises the cutting zone 16. The cutting zone 16 is arranged between the periphery of the first plate portion 13 and the VIP 15 so that the fist plate portion 13 easily can be trimmed without damaging the VIP 15. For example, one face of the first plate portion 13 can be provided with a notch or any other kind of marking indicating the cutting zone 16 to facilitate size adjustment. The second plate portion 14 can also be trimmed to adapt the width of the recess 12. Hence, the area of the elevated surface 11 is adjustable by means of cutting so that it can maintain its central position if required and so that the recess 12 can be adapted.

According to one embodiment of the invention the dimensions of the first plate portion 13 and thus the insulation plate 10 are 1.0 x 0.5 m when the VIP 15 measures 0.9 x 0.4 m, wherein the cutting zone 16 is 0.04 m on each side of the plate 10. However, the choice of dimensions is at the discretion of the manufacturer or client and is dependent on the application. Virtually any dimensions can be used within the scope of the invention. However, it could be favourable to use at least two plate sizes to obtain overlap between different layers of plates, wherein one plate is provided with half the length of the other for example. Hence, a plate size of 0.5 x 0.5 m would be appropriate as a complement to the above-mentioned plate size. The cutting zone 16 can also be used to obtain overlap between different layers of plates.

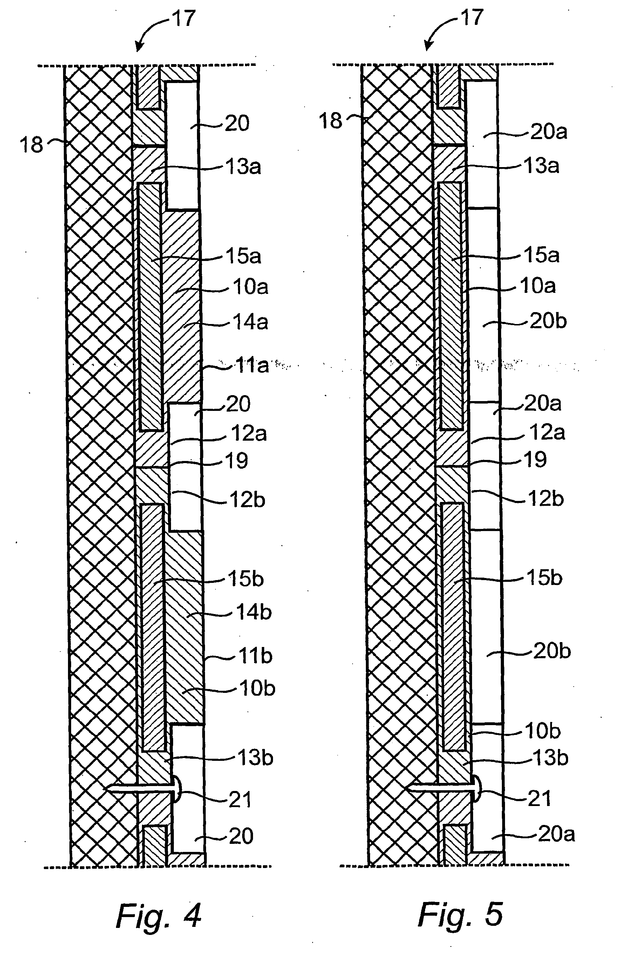

With reference to Fig. 4 an insulated structure 17 comprising a plurality of adjacent thermal insulation plates 10a, 10b is illustrated. The insulation plates 10a, 10b are positioned and fastened on a supporting structure 18, such as a brick or concrete wall or any other kind of supporting structure. The first face of the insulation plates 10a, 10b provided with the elevated surface 11a, 11 b is arranged outwards from the supporting structure 18, wherein the second face of the plates 10a, 10b is glued or fastened to the supporting structure 18. Preferably, the second face of the plates 10a, 10b is substantially flat and is attached to the supporting structure 18 by means of an adhesive and/or by means of dowels 21. The recess 12a of a first plate 10a faces the recess 12b of an adjacent second plate 10b over a joint 19 between adjacent plates 10a, 10b. The joint 19 is positioned between the first plate portions 13a, 13b of adjacent plates 10a, 10b. Facing recesses 12a, 12b form a recess or a gap having the joint 19 in the bottom centre of the gap.

A joint cover insulation plate 20 is arranged in the recesses 12a, 12b of adjacent plates 10a, 10b so that the plate 20 extends over the joint 19 between the adjacent plates 10a, 10b and overlaps the VIPs 15a, 15b to avoid thermal bridges.Thus, the recesses 12a, 12b are adapted to receive joint cover insulation plates 20. The joint cover insulation plate 20 extends continuously from the second plate portion 14a of the first plate 10a to the second plate portion 14b of the second plate 10b and thus extends uninterrupted over the joint 19 and the recesses 12a, 12b. The joint cover insulation plate 20 is preferably glued to the insulation plates 10a, 10b by means of an adhesive.

According to one embodiment of the present invention the joint cover insulation plate 20 comprises a VIP. The VIP of the joint cover insulation plate 20 is, for example, embedded in a cover structure for protection of the VIP and to facilitate gluing to the plates 10a, 10b by means of an adhesive. According to one embodiment of the present invention the cover structure is an expanded plastic structure, such as a polystyrene structure. Similar to the insulation plate 10, the joint cover insulation plate 20 may also be provided with a cutting zone.

Preferably, the thickness of the joint cover insulation plate 20 corresponds to the depth of the recess 12a, 12b to obtain a flat structure face for further processing, such as coating with mortar, rendering, etc.

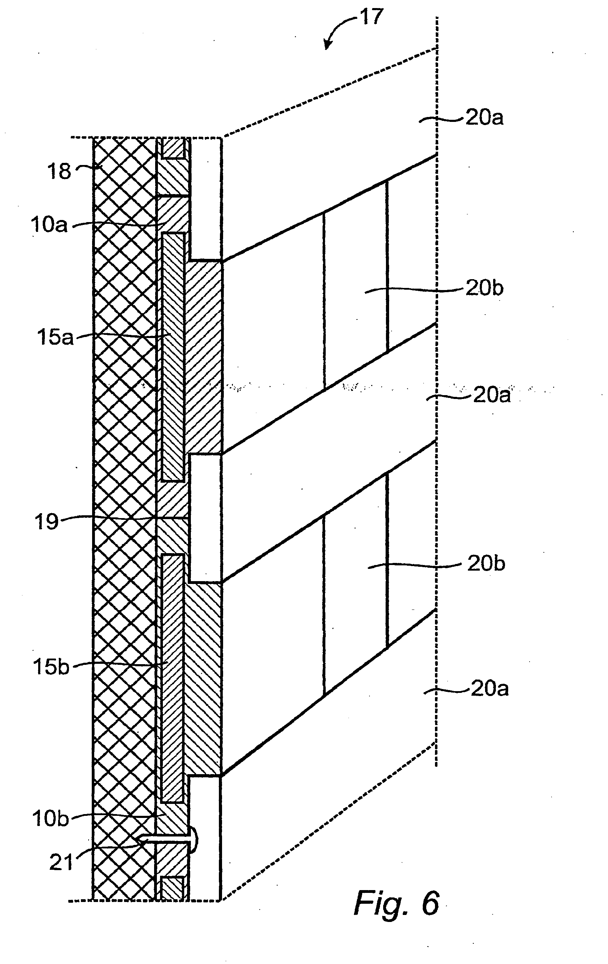

With reference also to Fig. 5 and Fig. 6 the thermally insulated structure 17 comprises horizontal joint cover insulation plates 20a and vertical joint cover insulation plates 20b extending continuously and uninterrupted between elevated surfaces 11 a, 11 b of adjacent insulation plates 10a, 10b so that there is continuous and uninterrupted insulation overlapping the VIPs 15a, 15b. According to one embodiment of the present invention the joint cover insulation plates 20a, 20b comprise VIPs 15 or other high efficient insulation panels, wherein the VIPs 15 of the plates 10 are overlapped by VIPs of the joint cover insulation plates 20a, 20b. Alternatively, at least the vertical joint cover insulation plates 20b are made from expanded plastic, such as expanded polystyrene.

The size of the horizontal joint cover insulation plate 20a is for example 1000 x 250 mm for the above described sizes of the plates 10, wherein the size of the vertical joint cover insulation plate 20b is 250 x 250 mm. At least the vertical joint cover insulation plate 20b can be provided with cutting zones similar to those of the plates 10, wherein the length can be cut to 170 mm. As described above the dimensions can be customized according to the application. According to one embodiment of the invention the thickness of the insulation plates 10 is 80 to 110 mm. For example, a 20 mm thick VIP can be provided with 10 mm expanded polystyrene on each side, wherein the thickness of the first plate portion 13 amounts to 40 mm. Correspondingly, the thickness of the joint cover insulation plates 20 can also be 40 mm to obtain a total thickness of 80 mm. The VIPs 15 can be provided with a thickness of, for example, 10 to 50 mm.

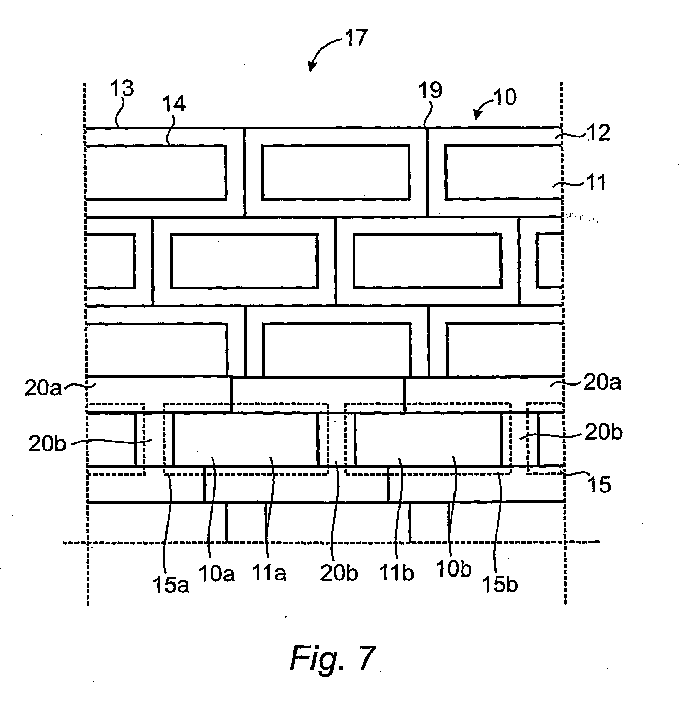

With reference also to Fig. 7 a half-completed structure 17 according to one embodiment of the invention is illustrated. The structure 17 is provided with insulation plates 10 arranged in layers, optionally so that the layers are overlapping each other. The plates 10 are positioned and fastened to a supporting structure 18 (shown in Fig. 4 to Fig. 6) so that the first face of the plate 10 having the elevated surface 11 is arranged away from the structure 17, wherein a substantially flat second face of the plate 10 is fastened to the supporting structure 18.

The recesses 12 of the plates 10 form recesses, indentations or gaps over the joints 19 and over a joint area between adjacent plates 10 for receiving the joint cover insulation plates 20a, 20b. (In Fig. 7 only the lower layers of plates 10 are provided with joint cover insulation plates 20a, 20b.) The joint cover insulation plates 20a, 20b are arranged in said recesses 12 for covering said joints 19 and joint areas and for overlapping the VIPs 15. The VIPs 15 are indicated by dashed lines in one layer of plates 10 in Fig. 7. The joint cover insulation plates 20a, 20b are positioned in the recesses 12 so that the plates 20a, 20b extend continuously between the elevated surfaces 11a, 11b of adjacent plates 10a, 10b, i.e. so that they extend from a first position overlapping the VIP 15a of a first plate 10a, over the joint 19 between the first plate portions 13 of adjacent plates 10a, 10b and to a second position overlapping the VIP 15b of a second plate 10b adjacent to the first plate 10a without any interruption.

As described above at least the horizontal joint cover insulation plates 20a can comprise VIPs, wherein the periphery of the VIPs arranged inside the plates 10 are overlapped by VIPs of at least the horizontal joint cover insulation plates 20a. Also the vertical joint cover insulation plates 20b can comprise VIPs. Alternatively, the vertical joint cover insulation plates 20b are made of an expanded plastic, such as expanded polystyrene or other high efficient insulation.

## Claims

1. A thermal insulation plate (10) for construction of thermally insulated structures (17), said plate comprising an insulation panel (15) having a higher insulating capacity than the remaining portions thereof, ***characterised* in that** a first face of the plate (10) comprises an elevated surface (11) leaving a circumferential recess (12) and resulting in a first plate portion (13) with the insulation panel (15) and a second plate portion (14) having a smaller circumference than the insulation panel (15), wherein the outer periphery of the insulation panel (15) projects beyond the outer periphery of the second plate portion (14) so that the recess (12) overlaps the insulation panel (15) for receiving a joint cover insulation plate-(20).

2. A thermal insulation plate according to claim 1, ***characterised* in that** the first face comprising the elevated surface (11) and the recess (12) is an outer face of the plate (10).

3. A thermal insulation plate according to claim 2, ***characterised* in that** the opposite second face of the plate is substantially flat for fixing to a supporting structure (18).

4. A thermal insulation plate according to any of the preceding claims, ***characterised* in that** the insulation panel (15) is embedded in the first plate portion (13) forming a protecting structure.

5. A thermal insulation plate according to claim 4, ***characterised* in that** the protecting structure is an expanded plastic structure covering the insulation panel (15).

6. A thermal insulation plate according to any of the preceding claims, ***characterised* in that** the insulation panel (15) is a vacuum insulation panel.

7. A thermal insulation plate according to any of the preceding claims, ***characterised* in that** the first plate portion (13) is provided with a cutting zone (16) for size adjustment of the insulation plate (10).

8. A thermal insulation plate according to any of the preceding claims, ***characterised* in that** the second plate portion (14) can be trimmed for size adjustment of the elevated surface (11) and the recess (12).

9. A thermally insulated structure (17) comprising a plurality of adjacent thermal insulation plates (10a, 10b) according to any of the preceding claims, ***characterised* in that** the joint cover insulation plates (20a, 20b) are arranged in the recesses (12a, 12b) formed by adjacent insulation plates (10a, 10b) so that the joint cover insulation plates (20a, 20b) extend over the joints (19) between adjacent insulation plates (10a, 10b) and overlap the insulation panels (15a, 15b) to avoid thermal bridges.

10. A structure according to claim 9, ***characterised* in that** the joint cover insulation plates (20a, 20b) extend continuously between elevated surfaces (11a, 11b) of adjacent plates (10a, 10b).

11. A structure according to any of claims 9 or 10, ***characterised* in that** the joint cover insulation plate (20a, 20b) comprises a vacuum insulation panel embedded in a cover structure.

12. A method for constructing a thermally insulated structure (17), comprising the steps of
positioning and fastening insulation plates (10a, 10b) on a supporting structure (18), which insulation plates (10a, 10b) comprise an insulation panel (15a, 15b) having a higher insulating capacity than the remaining portions thereof, ***characterised* by** the steps of
arranging an elevated surface (11a, 11b) of each insulation plate (10a, 10b) in the outer direction of the structure (17) for forming a recess (12a, 12b) over a joint (19) area between adjacent insulation plates (10a, 10b),
positioning and fastening joint cover insulation plates (20a, 20b) in said recesses (12a, 12b) for covering said joint areas and overlapping the insulation panels(15a, 15b).

13. A method according to claim 12, ***characterised* by** the step of positioning joint cover insulation plates (20a, 20b) in the recesses (12a, 12b) so that the joint cover insulation plates (20a, 20b) extend continuously between the elevated surfaces (11a, 11b) of adjacent insulation plates (10a, 10b).

14. A method according to claim 13, ***characterised* by** the step of overlapping vacuum insulation panels (15a, 15b) arranged inside the insulation plates (10a, 10b) with joint cover insulation plates (20a, 20b).

15. A method according to claim 14, ***characterised* by** the step of overlapping the vacuum insulation panels (15a, 15b) with joint cover insulation plates (20a, 20b) comprising vacuum insulation panels.

## Patentansprüche

1. Wärmedämmplatte (10) für den Aufbau von wärmegedämmten Strukturen (17), wobei die Platte ein Dämmpanel (15) mit einem höheren Dämmvermögen als die übrigen Abschnitte aufweist,
**dadurch gekennzeichnet, dass**
eine erste Fläche der Platte (10) eine erhöhte Oberfläche (11) aufweist, welche eine umgebende Vertiefung (12) zurücklässt und in einen ersten Plattenabschnitt (13) mit dem Dämmpanel (15) und einem zweiten Plattenabschnitt (14) mit einem kleineren Umfang als das Dämmpanel (15) resultiert, wobei der Außenumfang des Dämmpanels (15) gegenüber dem Außenumfang des zweiten Plattenabschnitts (14) vorsteht, so dass die Vertiefung (12) das Dämmpanel (15) für die Aufnahme einer Fugenabdeckdämmplatte (20) überlappt.

2. Wärmedämmplatte nach Anspruch 1,
**dadurch gekennzeichnet, dass**
die die erhöhte Fläche (11) und die Vertiefung (12) aufweisende erste Fläche eine Außenfläche der Platte (10) ist.

3. Wärmedämmplatte nach Anspruch 2,
**dadurch gekennzeichnet, dass**
die gegenüberliegende zweite Fläche der Platte im Wesentlichen flach für die Befestigung an einer Stützstruktur (18) ausgebildet ist.

4. Wärmedämmplatte nach einem der vorhergehenden Ansprüche,
**dadurch gekennzeichnet, dass**
das Dämmpanel in den ersten Plattenabschnitt (13) zur Bildung einer Schutzstruktur eingebettet ist.

5. Wärmedämmplatte nach Anspruch 4,
**dadurch gekennzeichnet, dass**
die Schutzstruktur eine expandierte Kunststoffstruktur ist, welche das Dämmpanel (15) abdeckt.

6. Wärmedämmplatte nach einem der vorhergehenden Ansprüche,
**dadurch gekennzeichnet, dass**
das Dämmpanel (15) ein Vakuumdämmpanel ist.

7. Wärmedämmplatte nach einem der vorhergehenden Ansprüche,
**dadurch gekennzeichnet, dass**
der erste Plattenabschnitt (13) mit einer Schnittzone (16) für die Größenanpassung der Isolierplatte (10) versehen ist.

8. Wärmedämmplatte nach einem der vorhergehenden Ansprüche,
**dadurch gekennzeichnet, dass**
der zweite Plattenabschnitt (14) zur Größenanpassung der erhöhten Fläche (11) und der Vertiefung (12) trimmbar ist.

9. Wärmedämmstruktur (17) mit einer Anzahl von benachbarten Wärmedämmplatten (10a, 10b) nach einem der vorhergehenden Ansprüche,
**dadurch gekennzeichnet, dass**
die Fugenabdeckdämmplatten (20a, 20b) in den Vertiefungen (12a, 12b) angeordnet sind, die durch benachbarte Dämmplatten (10a, 10b) ausgebildet sind, so dass die Fugenabdeckdämmplatten (20a, 20b) sich über die Fugen (19) zwischen benachbarten Dämmplatten (10a, 10b) erstrecken und die Dämmpanele (15a, 15b) zur Meidung von Wärmebrücken überlappen.

10. Struktur nach Anspruch 9,
**dadurch gekennzeichnet, dass**
die Fugenabdeckdämmplatten (20a, 20b) sich kontinuierlich zwischen erhöhten Oberflächen (11a, 11b) von benachbarten Platten (10a, 10b) erstrecken.

11. Struktur nach einem der Ansprüche 9 oder 10,
**dadurch gekennzeichnet, dass**
die Fugenabdeckdämmplatte (20a, 20b) ein Vakuumdämmpanel aufweist, welches in einer Abdeckstruktur eingebettet ist.

12. Verfahren zur Herstellung einer Wärmedämmstruktur (17) mit den Schritten
Positionierung und Befestigung von Dämmplatten (10a, 10b) auf einer Stützstruktur (18), wobei die Dämmplatten (10a, 10b) ein Dämmpanel (15a, 15b) mit einem höheren Dämmvermögen als die übrigen Abschnitte aufweisen, **gekennzeichnet durch** die Schritte der
Anordnung einer erhöhten Oberfläche (11a, 11b) einer jeden Dämmplatte (10a, 10b) in die äußere Richtung der Struktur (17) zur Bildung einer Vertiefung (12a, 12b) über einen Fugenbereich (19) zwischen benachbarten Isolierplatten (10a, 10b),
Positionierung und Befestigung von Fugenabdeckdämmplatten (20a, 20b) in den Vertiefungen (12a, 12b) zur Abdeckung der Fugenbereiche und zum Überlappen der Dämmpanele (15a, 15b).

13. Verfahren nach dem Anspruch 12,
**gekennzeichnet durch**
die Schritte der Positionierung von Fugenabdeckdämmplatten (20a, 20b) in den Vertiefungen (12a, 12b), so dass die Fugenabdeckdämmplatten (20a, 20b) sich kontinuierlich zwischen den erhöhten Oberflächen (11a, 11b) von benachbarten Dämmplatten (10a, 10b) erstrecken.

14. Verfahren nach Anspruch 13,
**gekennzeichnet durch**
den Schritt der Überlappung von Vakuumisolierpanelen (15a, 15b), welche in den Isolierplatten (10a, 10b) angeordnet sind, mit Fugenabdeckdämmplatten (20a, 20b).

15. Verfahren nach Anspruch 14,
**gekennzeichnet durch**
den Schritt der Überlappung der Vakuumisolierpanelen (15a, 15b) mit Fugenabdeckdämmplatten (20a, 20b) umfassend Vakuumdämmpanele.

## Revendications

1. Plaque d'isolation thermique (10) pour la construction de structures thermiquement isolées (17), ladite plaque comprenant un panneau isolant (15) ayant une plus grande capacité d'isolation que les portions restantes de celle-ci, **caractérisée en ce qu'**une première face de la plaque (10) comprend une surface élevée (11) laissant un retrait circonférentiel (12) et résultant en une première portion de plaque (13) avec le panneau isolant (15) et une deuxième portion de plaque (14) ayant une plus petite circonférence que le panneau isolant (15), la périphérie externe du panneau isolant (15) faisant saillie au-delà de la périphérie externe de la deuxième portion de plaque (14) de telle sorte que le retrait (12) recouvre le panneau isolant (15) de manière à recevoir une plaque d'isolation couvre-joint (20).

2. Plaque d'isolation thermique selon la revendication 1, **caractérisée en ce que** la première face comprend la surface élevée (11) et le retrait (12) est une face externe de la plaque (10).

3. Plaque d'isolation thermique selon la revendication 2, **caractérisée en ce que** la deuxième face opposée de la plaque est substantiellement plane pour la fixation à une structure de support (18).

4. Plaque d'isolation thermique selon l'une quelconque des revendications précédentes, **caractérisée en ce que** le panneau isolant (15) est noyé dans la première portion de plaque (13) en formant une structure de protection.

5. Plaque d'isolation thermique selon la revendication 4, **caractérisée en ce que** la structure de protection est une structure en plastique expansé recouvrant le panneau isolant (15).

6. Plaque d'isolation thermique selon l'une quelconque des revendications précédentes, **caractérisée en ce que** le panneau isolant (15) est un panneau isolant sous vide.

7. Plaque d'isolation thermique selon l'une quelconque des revendications précédentes, **caractérisée en ce que** la première portion de plaque (13) est pourvue d'une zone de coupe (16) en vue de l'ajustement de taille de la plaque d'isolation (10).

8. Plaque d'isolation thermique selon l'une quelconque des revendications précédentes, **caractérisée en ce que** la deuxième portion de plaque (14) peut être coupée à la longueur requise en vue d'un ajustement de la taille de la surface élevée (11) et du retrait (12).

9. Structure thermiquement isolée (17) comprenant une pluralité de plaques d'isolation thermique (10a, 10b) adjacentes selon l'une quelconque des revendications précédentes, **caractérisée en ce que** les plaques d'isolation couvre-joint (20a, 20b) sont agencées dans les retraits (12a, 12b) formés par des plaques d'isolation adjacentes (10a, 10b), de telle sorte que les plaques d'isolation couvre-joint (20a, 20b) s'étendent par-dessus les joints (19) entre des plaques d'isolation adjacentes (10a, 10b) et recouvrent les panneaux isolants (15a, 15b) pour éviter des ponts thermiques.

10. Structure selon la revendication 9, **caractérisée en ce que** les plaques d'isolation couvre-joint (20a, 20b) s'étendent en continu entre des surfaces élevées (11a, 11b) de plaques adjacentes (10a, 10b).

11. Structure selon l'une quelconque des revendications 9 ou 10, **caractérisée en ce que** la plaque d'isolation couvre-joint (20a, 20b) comprend un panneau isolant sous vide noyé dans une structure de recouvrement.

12. Procédé de construction d'une structure thermiquement isolée (17),
comprenant les étapes consistant à :
positionner et attacher des plaques d'isolation (10a, 10b) sur une structure de support (18), lesquelles plaques d'isolation (10a, 10b) comprennent un panneau isolant (15a, 15b) ayant une plus grande capacité d'isolation que les portions restantes de celle-ci, **caractérisé par** les étapes consistant à :
agencer une surface élevée (11a, 11b) de chaque plaque d'isolation (10a, 10b) dans la direction extérieure de la structure (17) pour former un retrait (12a, 12b) par-dessus une zone de joint (19) entre des plaques d'isolation adjacentes (10a, 10b),
positionner et attacher des plaques d'isolation couvre-joint (20a, 20b) dans lesdits retraits (12a, 12b) pour recouvrir lesdites zones de joint et recouvrir les panneaux isolants (15a, 15b).

13. Procédé selon la revendication 12, **caractérisé par** l'étape consistant à positionner des plaques d'isolation couvre-joint (20a, 20b) dans les retraits (12a, 12b) de telle sorte que les plaques d'isolation couvre-joint (20a, 20b) s'étendent en continu entre les surfaces élevées (11a, 11b) de plaques d'isolation adjacentes (10a, 10b).

14. Procédé selon la revendication 13, **caractérisé par** l'étape consistant à recouvrir des panneaux isolants sous vide (15a, 15b) agencés à l'intérieur des plaques d'isolation (10a, 10b) avec des plaques d'isolation couvre-joint (20a, 20b).

15. Procédé selon la revendication 14, **caractérisé par** l'étape consistant à recouvrir les panneaux isolants sous vide (15a, 15b) avec des plaques d'isolation couvre-joint (20a, 20b) comprenant des panneaux d'isolation sous vide.
